(19) Europäisches Patentamt
European Patent Office
Office européen des brevets

(11) **EP 4 293 346 A1**

(12) **EUROPEAN PATENT APPLICATION**

(43) Date of publication:
**20.12.2023   Bulletin 2023/51**

(21) Application number: **22382568.8**

(22) Date of filing: **14.06.2022**

(51) International Patent Classification (IPC):
**G01N 21/87** (2006.01)      **G06T 7/00** (2017.01)
**G06N 3/04** (2023.01)      **G06N 3/08** (2023.01)
**G01N 21/88** (2006.01)

(52) Cooperative Patent Classification (CPC):
**G01N 21/87; G06N 3/045; G06N 3/08;**
G01N 2021/8883; G06N 20/00; G06N 20/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Fundació Institut de Ciències Fotòniques**
  **08860 Castelldefels (ES)**
• **Institució Catalana de Recerca I Estudis**
  **Avançats**
  **08010 Barcelona (ES)**

(72) Inventors:
• **PRUNERI, Valerio**
  **Castelldefels (ES)**

• **RATAN, Rajev**
  **London (GB)**
• **PROTOPAPA, Pavlo**
  **Geneva (CH)**
• **NOYAN, Alican**
  **Eindhoven (NL)**
• **GRUDININ, Anatoloy**
  **Southampton (GB)**

(74) Representative: **Kennedy, Richard E.**
**Venner Shipley LLP**
**5 Stirling House**
**Stirling Road**
**The Surrey Research Park**
**Guildford GU2 7RF (GB)**

(54) **METHODS AND SYSTEMS FOR GEMSTONE IDENTIFICATION, TRACKING AND/OR TRACING**

(57)     A method comprising obtaining spectral information for a gemstone, wherein obtaining the spectral information comprises receiving data that has been transmitted over a network, and determining, at one or more data processing devices, identification information for the gemstone using a machine learning model. Determining the identification information comprises processing the spectral information using the machine learning model to generate a set of one or more outputs of the machine learning model from which the identification information is derived. The identification information comprises: a unique identifier that has been assigned to the gemstone, or information identifying an origin of the gemstone.

Figure 2

**Description**

**Field**

This specification relates to methods and systems for gemstone identification, tracking and/or tracing.

**Background**

Traceability and transparency - including tracking from mine to market - of various gemstones ranging from coloured stones to flawless diamonds is an increasingly important topic in the industry of mining and trade of precious stones. This is a result of both consumer demands for detailed information on the provenance and possible alteration of gems and marking of gems, to growing government legislation on the mineral supply chain. To address this problem certification mechanisms and technologies have been proposed to address traceability challenges.

Existing approaches to tracking and tracing are based on marking or tagging gemstones using various techniques such as laser encryption and artificial embedding of nano-sized particles that can store specific information such as mine location or mining period. However existing approaches have either limited application, or add additional industrial steps, making them more expensive and often not suitable for mass implementation. Moreover, existing markings can be altered and while alterations to markings might be detected, existing techniques do not exploit detection of fundamental elements that distinguish one gemstone from another, including by way of provenance.

**Summary**

The present specification describes a method comprising obtaining spectral information for a gemstone, wherein obtaining the spectral information comprises receiving data over a network. The method further comprises determining, at one or more data processing devices, identification information for the gemstone using a machine learning model, wherein determining the identification information comprises processing the spectral information using the machine learning model to generate a set of one or more outputs of the machine learning model from which the identification information is derived. The identification information may comprise a prediction of a unique identifier that has been assigned to the gemstone, or it may comprise information identifying a predicted origin of the gemstone. The unique identifier is unique in the sense that it has been assigned to the gemstone and not to any other gemstone.

Accordingly, example techniques described herein do not rely on (or make use of) an inscription on the gemstone in order to identify the gemstone. Instead, techniques described herein make use of spectra acquired from the gemstone for identification, thereby leveraging information which is already stored inside the gemstone through defects originated by magma droplets and naturally developed crystallographic lattice dislocations and inclusions.

The gemstone may be diamond. Alternatively, the gemstone may be a sapphire, emerald, ruby, or alexandrite

The spectral information may comprise one or more spectral data sets for the gemstone. Each spectral data set may comprise a measurement in the form of a spectrum. In some examples, the spectral information may comprise a plurality of spectral data sets acquired for different regions of the gemstone. Determining the identification information may comprise comparing each spectral data set with a plurality of stored spectral data sets obtained from different regions of a known gemstone.

Processing the spectral information using the machine learning model to generate the set of one or more outputs may comprise, for each of the one or more spectral data sets, inputting, into the machine learning model, the spectral data set, and generating a respective output. The machine learning model may be a trained machine learning model which is trained such that the respective output comprises a representation of the spectral data set in a latent space (e.g. a reduced-dimension space) in which points related to the same gemstone form a cluster, or in which points related to the same gemstone origin form a cluster.

Determining identification information for the gemstone may further comprise: comparing the set of one or more outputs with one or more labelled data clusters, wherein each of the one or more labelled data clusters is associated with respective label data identifying a respective known gemstone or a respective known gemstone origin; selecting one of the one or more labelled data clusters dependent on the comparison, and determining the unique identifier or the information identifying an origin of the gemstone based on the label data for the selected labelled data cluster.

For example, the label data for the selected labelled data cluster may be assigned as the unique identifier or the information identifying an origin of the gemstone.

Comparing the set of one or more outputs with one or more labelled data clusters (e.g. with a plurality of labelled data clusters) may comprise: determining a measure of distance between the set of one or more outputs and the one or more labelled data clusters, wherein selecting one of the one or more labelled data clusters dependent on the comparison comprises selecting a labelled data cluster for which the measure of distance is less than a threshold, or for which the measure of distance is the smallest.

The set of one or more outputs of the machine learning model may comprise a plurality of outputs, each output being generated by inputting a respective spectral data set into the machine learning model. For each of the plurality of outputs, a measure of distance (e.g. a Euclidean distance or a Cosine distance) may be determined between the output and each of a plurality of points in the labelled data cluster. These measures of distance may be combined (e.g. summed or average) to determine the measure of distance between the plurality of outputs (as a whole) and the one or more labelled data clusters.

The selected labelled data cluster may comprise one of a plurality of labelled data clusters, each labelled with a different identification code. Determining the identification information for the gemstone may comprise determining that the obtained spectral information is associated with one of the plurality of identification codes,

Each of the labelled data clusters may comprise a set of data points, wherein the data points of the labelled data cluster comprise latent space representations of spectral data sets obtained from the same gemstone, or obtained from gemstones having the same origin.

Obtaining spectral information for the gemstone may further comprise spectroscopically obtaining one or more spectral data sets for one or more respective regions of the gemstone, prior to receiving the data over the network. Spectroscopically obtaining the spectral information may comprise spectroscopically obtaining a plurality of spectral data sets from a respective plurality of regions of the gemstone.

Spectroscopically obtaining a spectral data set for a region of a gemstone may comprise obtaining spectral data for electromagnetic radiation transmitted by, scattered by, or reflected from the region. Alternatively, spectroscopically obtaining spectral data for a region may comprise obtaining spectral data for luminescence (for example fluorescence) from the region due to its illumination by electromagnetic radiation. Further alternatively, spectroscopically obtaining spectral data may comprise obtaining spectral data for inelastically scattered electromagnetic radiation generated by a nonlinear process (e.g. a Raman process or harmonic generation) which occurs in the region due to its illumination by electromagnetic radiation.

In some cases, the electromagnetic radiation may comprise visible light, for example in embodiments in which luminescence spectra are acquired. In some cases, the electromagnetic radiation may comprise near-infrared light, for example in cases in which spectra from second (or higher) harmonic generation processes are acquired.

The method may further comprise updating data for a gemstone in a gemstone information data store. The gemstone information data store may comprise a centralised database, a distributed database, or a blockchain. The data for the gemstone may be uniquely identified with the unique identifier.

This specification also provides a method of digitally tracking actions in a gemstone supply chain, comprising: receiving, over a network, information identifying an action which has been performed in relation to a gemstone; determining a unique identifier for the gemstone in accordance with any of the methods described herein, and updating data for the gemstone in a gemstone information data store to indicate that the action has been performed. The data for the gemstone in the gemstone information data store may be uniquely identified by the unique identifier.

The data received over the network may comprise the spectral information, or it may for example comprise an encoded or compressed representation of the spectral information from which the spectral information is obtained via a decoding or decompression technique.

Receiving data over the network may comprise receiving data at a network node. The network node may comprise a second network node (e.g. a remote network node) configured to receive data transmitted over the network from one or more first network nodes (e.g. one or more local network nodes). Determining the identification information and processing the spectral information may be performed at the second network node.

Receiving data over the network may comprise receiving data at data communication equipment. The data communication equipment may be connected to the network and may be configured to receive data from a plurality of devices which are also connected to the network. The network may be any suitable network, such as the internet. The data communication equipment may be further configured for connections to information stored remotely on the cloud or otherwise.

In some examples the identification information may comprise a unique identifier that has been assigned to the gemstone, if the gemstone is recognised. If the gemstone is not recognised, the identification information may comprise an indication that the gemstone has not been recognised.

The unique identifier, or information identifying an origin of the gemstone, may comprise an identification code, which may be stored in computer memory after it is determined. The identification code may comprise a number, e.g. an integer. The identification code may comprise a fixed length number, including but not limited to a 64 bit number.

The unique identifier may uniquely identify data for the gemstone in a gemstone information data store. In particular, the unique identifier may match a key (e.g. primary key) in a gemstone information data store, wherein the key uniquely identifies data for the gemstone in the gemstone information data store.

The identification information may comprise information (e.g. an identification code) which is different to any inscription on the gemstone. That is, the identification code may not correspond to any inscription on the gemstone. Thus, in various examples, the unique identifier, or the information identifying an origin of the gemstone, may not be inscribed on the gemstone.

The machine learning model may comprise a neural network model.

This specification also provides a method of training a machine learning model (e.g. a neural network model, such as a Siamese neural network model) to generate a representation of an input spectral data set in a latent space in which points related to the same gemstone form a cluster, or in which points related to the same gemstone origin form a cluster. The method comprises obtaining training data comprising one or more training data items, wherein obtaining the training data comprises receiving data over a network (e.g. receiving data at a network node and/or receiving data at data communication equipment). Each training data item includes a pair of measurements selected from a set of measurements, each measurement in the set of measurements comprising a spectral data set. Each spectral data set comprises a measurement for a gemstone. Each training data item further comprises label indicating whether the pair of gemstones corresponding to the pair of measurements are the same gemstone, or are from the same gemstone origin. The method further comprises processing, at a data processing apparatus, the pairs of measurements included in the one or more training data items using the machine learning model to generate a predicted output for each training data item, and adjusting, at the data processing apparatus, parameters of the machine learning model based on a training objective, wherein the training objective comprises minimising a distance between the predicted output of related pairs and maximising the distance between the predicted outputs of unrelated pairs.

This specification also provides a system comprising a data processing apparatus configured to perform any of the methods disclosed here.

The system may further comprises one or more client systems. Each client system may comprise a spectroscopy arrangement to obtain one or more spectral data sets for the gemstone, the spectroscopy arrangement including a source of electromagnetic radiation configured for illuminating at least part of the gemstone, and a transmitter configured to transmit the one or more spectral data sets, or data derived therefrom, for processing using the machine learning model.

This specification also provides a non-transitory computer readable medium comprising computer-readable instructions which when executed by one or more processors, causes any one of the methods disclosed herein to be performed.

In various implementations described in this specification, acquisition on multiple (e.g. absorption) spectra from different probe volumes is combined with detection of small spectral differences through the use of a neural network, to provide accurate and non-invasive gemstone identification.

It should be noted that absorption can affect both reflected light scattered from the gemstone and transmission light through the gemstone. Therefore reflected scattered light, transmitted light or both can be used to record the spatial absorption map of the gemstone. In a more specific case, it is known to a skilled person in the art that reflecting the light at the back surface of an object is equivalent to measure in double pass transmission, apart from scattered reflected light collected at the same time. For creating the map, different techniques can be used, from translating the relative position of the gemstone with respect to a limited spot size beam, to rotating the gemstones with respect to a beam that is mainly scattered by a layer under the surface, or a beam interacting with the entire gemstone thickness and using apertures for achieving a spatially selected mapping.

This specification also provides a system comprising a spectroscopy arrangement to obtain one or more spectral data sets for one or more regions of a gemstone, the spectroscopy arrangement including a source of electromagnetic radiation configured for illuminating at least part of the gemstone. The system may further comprise data communication equipment configured to transmit said one or more spectral data sets, or data derived therefrom, over a network for processing by a remote data processing system. The data communication equipment maybe further configured to receive, from the remote data processing system, identification information comprising a unique identifier that has been assigned to the gemstone, or information identifying an origin of the gemstone.

The source may comprise a broadband source. The spectroscopy arrangement may include a spectrum analyser to obtain the spectral data for the one or more regions of the gemstone.

The spectroscopy arrangement may be configured to obtain the spectral data using Fourier Transform spectrometry.

The electromagnetic radiation may comprise mid-infrared light which may for example comprise one or more wavelengths in the range $2\mu m$ to $12\mu m$.

In some cases, the electromagnetic radiation may comprise visible light, for example in embodiments in which luminescence spectra are acquired. In some cases, the electromagnetic radiation may comprise near-infrared light, for example in cases in which spectra from second (or higher) harmonic generation processes are acquired.

As used herein, the term "spectroscopy" refers to techniques which analyse the interaction between electromagnetic radiation and a 3D object such as gemstone as a function of wavelength or frequency. Such interaction may include for example, reflection, absorption, luminescence, elastic or inelastic scattering etc. In some examples, a spectroscopy arrangement may analyse the spectrum of electromagnetic radiation after interaction with the gemstone in order to determine spectral data, for example by using a spectrometer. However, in other examples, a spectrometer is not used; instead spectral data is obtained by varying the wavelength of the source of electromagnetic radiation (e.g. a tunable laser), and a detector is used to detect the intensity of the electromagnetic radiation at each wavelength, after it has interacted with the gemstone. It will be understood that the term "spectroscopically" refers to use of a spectroscopy technique.

**Brief Description of the Figures**

So that the subject matter of this specification may be more easily understood, example embodiments thereof will now be described with reference to the accompanying drawings, in which:

Figure 1 shows a gemstone information system and a plurality of client systems;
Figure 2 illustrates use of the gemstone information system to track and trace gemstones through a gemstone supply chain;
Figure 3A illustrates an example spectroscopy arrangement;
Figure 3B shows steps of a data acquisition process;
Figure 4A and 4B illustrate a Fourier-transform infrared spectroscopy arrangement in transmission and reflection mode respectively;
Figure 4C illustrates an alternative Fourier-transform infrared spectroscopy arrangement in which an entire stone is illuminated and an aperture is used for collection;
Figure 4D illustrates an alternative spectroscopy arrangement in which a tunable narrow linewidth source is used for illumination;
Figure 5 illustrates components of a gemstone information system.
Figure 6(A) is a schematic illustrating spectral measurements (spectral data sets) in a 2D graph.
Figure 6(B) shows the result of processing the spectral measurements of Figure 6(A) using a trained neural network; as shown data points from the same gemstone form a cluster.
Figure 7 schematically illustrates a Siamese neural network;
Figure 8 illustrates measurements (spectral data sets) for different gemstones in a latent space in which measurements from the same gemstone form a cluster;
Figure 9 schematically illustrates a method for comparing data clusters for gemstones under test with labelled data clusters.
Figure 10 illustrates the results of a "blind" test based on 24 diamond samples, and
Figure 11 illustrates measurements (spectral data sets) for different gemstones in a latent space in which measurements from gemstones having the same origin form a cluster.

**Detailed description**

Overview

Diamonds were formed over 3 billion years ago deep within the Earth's crust under conditions of intense heat and pressure that cause carbon atoms to crystallise forming diamonds. Diamonds are found at a depth of approx. 150-200km below the surface of the Earth. Here, temperatures average 900 to 1,300 degrees Celsius and at a pressure of 45 to 60 kilobars (which is around 50,000 times that of atmospheric pressure at the Earth's surface). Under these conditions, molten lamproite and kimberlite (commonly known as magma) are also formed within the Earth's upper mantle and expand at a rapid rate. This expansion causes the magma to erupt, forcing it to the Earth's surface and taking along with it diamond bearing rocks. Moving at an incredible speed, the magma takes the path with least resistance, forming a 'pipe' to the surface.

As it cools the magma hardens to form Kimberlite and settles in vertical structures known as kimberlite pipes. These kimberlite pipes are the most significant source of diamonds, yet it is estimated that only 1 in every 200 kimberlite pipes contain gem-quality diamonds. The name 'Kimberlite' was derived from the South African town of Kimberley where the first diamonds were found in this type of rock.

A very similar formation process takes place for other gemstones such as sapphires, emeralds, rubies, alexandrite and others. For example natural emeralds form in either pegmatite deposits or hydrothermal veins in metamorphic environments. In a hydrothermal vein, hydrothermal fluids have escaped from magma deeper in the Earth's crust. When these fluids contain the specific elements that are in emeralds (like beryllium) and begin to cool in deposit veins, emeralds start to form.

As a result of diamond formation every diamond has tiny (e.g. nanoscale) magma droplets embedded into the diamond body and it is sensible to assume that every diamond has its own signature, similar to that of human fingerprint, which is result of unique distribution of both chemical elements inside magma droplets and the droplets itself. Actual chemical content of nano-droplets, its density and spatial distribution manifest itself in spectral intensity distribution in mid-infrared and therefore by analysing spectral features in the relevant frequency band one can establish direct links between unique features in optical spectra and a particular sample.

As a result of their formation and during their existence, diamonds contain defects such as impurity atoms (e.g. nitrogen, boron, hydrogen); carbon atom vacancies in the lattice or positioned in between normal lattice locations; and dislocations where planes of carbon atoms are offset from one another due to plastic deformation. Not all of these lattice imperfections create spectroscopic features, but several do so by allowing the diamond to absorb particular energies of incident light or radiation. Defects are usually distributed randomly in the volume of the diamond and can create spectroscopic features in different wavelength regions, optical (visible and infrared), Terahertz (also named mm waves) and microwaves.

For example, nitrogen related defects can give rise to absorption peaks at around 1000 cm-1 in the infrared spectrum (see "Microwave Spectroscopy as a Potential Tool for Characterizing Synthetic HPHT Diamonds", CrystEng-Comm 24(10):1849 (2022)). Data from different spectral measurement techniques can also be combined while each technique can also be enhanced by the presence of external agents. For example microwaves can assist fluorescence measurements in diamonds for studying charge state in nitrogen-vacancy in diamond (see PHYSICAL REVIEW APPLIED 14, 014009 (2020)).

Various example techniques described in this specification determine a unique identifier (e.g. an identification code) for a gemstone based on spectral measurements of the gemstone with subsequent processing of the acquired data using a trained machine learning model. Spectral information may be acquired by measurements performed on the gemstone at a local client system, while processing of the acquired data using the machine learning model may be performed at a remote (e.g. cloud-based) gemstone information system which receives data from the local system over a computer network (e.g. over the internet). This allows a particular gemstone to be identified at any stage in the gemstone supply chain and/or at any suitable geographical location which has network access to the gemstone information system. In various implementations, the unique identifier for a gemstone may be used to identify and update a set of data stored for the gemstone in a gemstone information data store (e.g. a gemstone information database), thereby permitting non-invasive tracking and tracing of gemstones from mine to market, as described in more detail below.

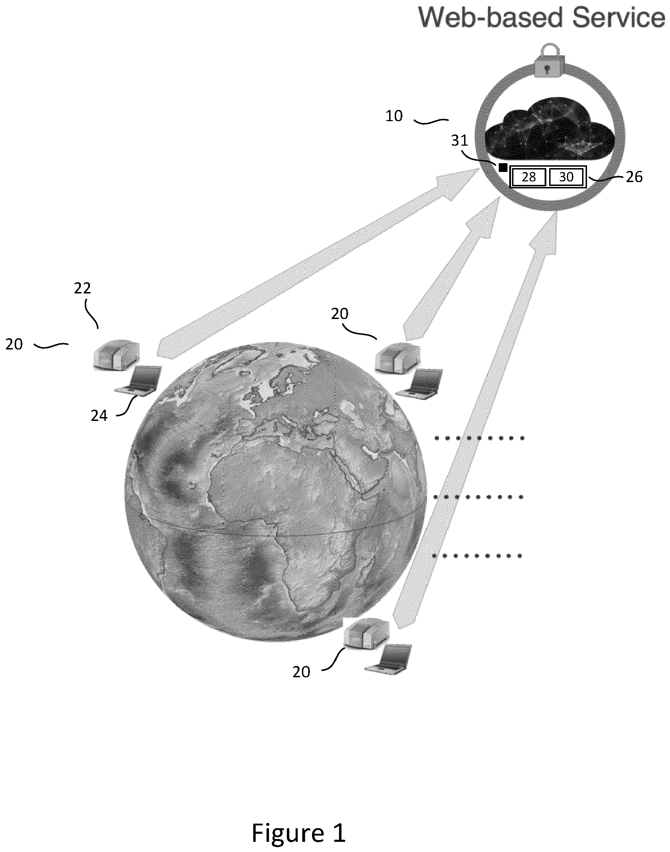

Figure 1 shows a gemstone information system 10 and a plurality of client systems 20. Each client system 20 includes: a spectroscopy arrangement 22 to acquire spectral information from a gemstone, and a computing device 24 which includes data communication equipment (e.g. a WiFi transmitter or Ethernet connection) for use in uploading data to the gemstone information system 10 over a network (e.g. over the internet). Thus, each computing device 24 acts as a network node of the computer network (which may be referred to herein as a local network node).

As described in more detail below, the spectral information acquired by each client device and transmitted to the gemstone information system 10 may comprise a plurality of spectral data sets (e.g. a plurality of spectra) acquired for different regions of the gemstone (e.g. various locations of the sample essentially covering the entire volume of the gemstone), although in some cases a single spectral data set (e.g. a single spectrum) may be acquired and transmitted. It will be understood that in some examples, the spectral information may be encoded or compressed for transmission.

Suitable encoding and/or compression techniques will be evident to those skilled in the art and will not be described here.

The gemstone information system 10 comprises a data processing apparatus including one or more data processing devices (e.g. one or more processors) and one or more memory devices for storing instructions and data. The gemstone information system 10 may be a cloud-based system in which the devices (e.g. data processing devices, memory devices) are distributed over different locations (e.g. different data centres). As shown, the gemstone information system implements a data storage system 26 which stores a machine learning model 28 and a gemstone information data store 30. The gemstone information data store may for example comprise a database hosted by the gemstone information system 10.

The gemstone information system 10 also includes one or more network nodes 31, which may be referred to herein as remote network node(s), for receiving data transmitted over the network from the client systems 20. The network node(s) of the gemstone information system may comprise data communication equipment such as a modem, hub, bridge, or switch, or may comprise a data processing device (e.g. computing device) which forms part of the gemstone information system 10.

The gemstone information data store 30 and connections to the gemstone information system 10 can be secured using appropriate cryptographic techniques which are well known to those skilled in the art and will not be described here. As an example, the computing devices 24 of client systems 20 may be provided with appropriate digital access credentials to permit access to the gemstone information system 10. Moreover, known techniques may be used to set permissions to control or limit access of certain client devices 20 to the gemstone information system 20, e.g. to place restrictions on the ability of certain client devices 20 to cause updates to data stored in the gemstone information data store 30.

In order to provide training data for training the machine learning model 28, various mines (e.g. diamond mines) located at different locations around the world may each be equipped with a client system 20 with access to the gemstone information system 10. Gemstones extracted from each mine may be characterised using the spectroscopy arrangement 22 of the client system 20, as described in more detail below, to acquire spectral information for each gemstone, which may comprise a plurality of spectral data sets for different regions of the gemstone. The spectral information may be uploaded to the gemstone information system 10, as illustrated in Figure 1, for use in training the machine learning model. Training data may alternatively or in addition be provided from other sites equipped with a client system 20 which is authorised to upload training data to the gemstone information system 10.

In this way, training data comprising spectral information for each of a plurality of known gemstones is received at gemstone information system 10. Other information relating to each known gemstone (e.g. information identifying the diamond mine from which it was extracted) may additionally be transmitted from the respective client device 20 and received at the gemstone information system 10.

As described in more detail below, the training process comprises training the machine learning model 28 to generate, for each spectral data set that is received as an input to the machine learning model, a representation of the spectral data set in a latent space in which points related to the same gemstone form a cluster.

After the machine learning model has been trained, latent space representations of the spectral data sets used to train the machine learning model are stored in the data storage system 26 of the gemstone information system 10. The latent space representations of the spectral data sets for each gemstone form a respective data cluster, which is assigned a respective label comprising an identification code for the gemstone. The identification code that is assigned to each gemstone may for example be a number of fixed length such as a 64 bit unsigned integer. For example, a gemstone may be given, as its identification code, the next integer which has not yet been assigned to a gemstone, thus ensuring that each gemstone is provided with a unique code. Once the identification code for a gemstone is assigned, it is not subsequently changed. Note that since the spectral information acquired for the gemstone reflects the density and distribution of magma droplets inside the gemstone, the unique ID number assigned to a gemstone is independent of the physical state of the gemstone (e.g. rough or polished).

Once the machine learning model has been trained and identification codes have been assigned, the gemstone information system 10 may be used to determine identification codes for gemstones based on spectral information received from the client devices 20. As described in more detail below, each client device is configured to acquire spectral information, which may comprise multiple spectral data sets for different regions of the gemstone. To determine the identification code that is assigned to a gemstone, the gemstone information system inputs each of the multiple spectral data sets for the gemstone into the trained machine learning model to generate a respective output for each spectral data set. As discussed above and in further detail below, the machine learning model is configured by its training such that each output comprises a representation of the corresponding input spectral data set in a latent space (also referred to herein as a reduced-dimension space) in which points related to the same gemstone form a cluster. The set of outputs generated by the machine learning model for the gemstone is then compared with one or more of the labelled data clusters stored in the data storage system 26 (see above). More specifically, to compare the set of outputs generated by the machine learning model with a labelled data cluster, a measure of distance is determined between each output of the set of outputs and each point in the labelled data cluster, and these measures of distance are then summed or averaged to determine a measure of distance between the set of outputs (as a whole) and the labelled data cluster. If the measure of distance is below a threshold, then the identification code for the gemstone may then be determined as the label of the labelled data clusters. The set of outputs generated by the machine learning model for the gemstone may be compared with a plurality of labelled data clusters until a match is found (e.g. until the measure of distance between the set of one or more outputs and a labelled data cluster is less than the threshold).

The ability to determine identification codes assigned to gemstones allows the gemstone information system 10 to track and trace gemstones throughout the gemstone supply chain, from point of origin, through production/processing states, to commercial sales. As used herein, the term "tracking" refers to keeping track of the current state or location of a gemstone, for example the current stage of manufacture or processing (e.g. whether the gemstone is 'rough' or 'polished'), current certification, current ownership etc. The term "tracing" refers to obtaining information about the status history or location history or the gemstone, e.g. to determining the origin of a gemstone (e.g. the mine from which it was extracted), the processing which has been performed on it, certification(s) it has received, and transactions which have occurred in relation to it.

For these purposes, the gemstone information system 10 maintains data for gemstones in gemstone information data store 30. For each gemstone, the respective identification code may serve as a unique ID (e.g. key, such as a primary key) which uniquely identifies a set of data stored for the gemstone in the gemstone information data store 30. The set of data stored for each gemstone may identity the production status of the gemstone (e.g. rough or polished), current certification status of the gemstone, current location of the gemstone and/or current ownership of the gemstone. Furthermore the set of data stored for each gemstone may record the origin of the gemstone (e.g. the mine from which it was originally extracted), actions that have been performed in relation to the gemstone (e.g. gemstone processing actions such as cutting or polishing, or commercial transactions such as sales) and/or certification(s) which the gemstone has received. The set of data stored for each gemstone may additionally or alternatively include any other suitable information which may have been provided by the client device(s) 20 from time to time.

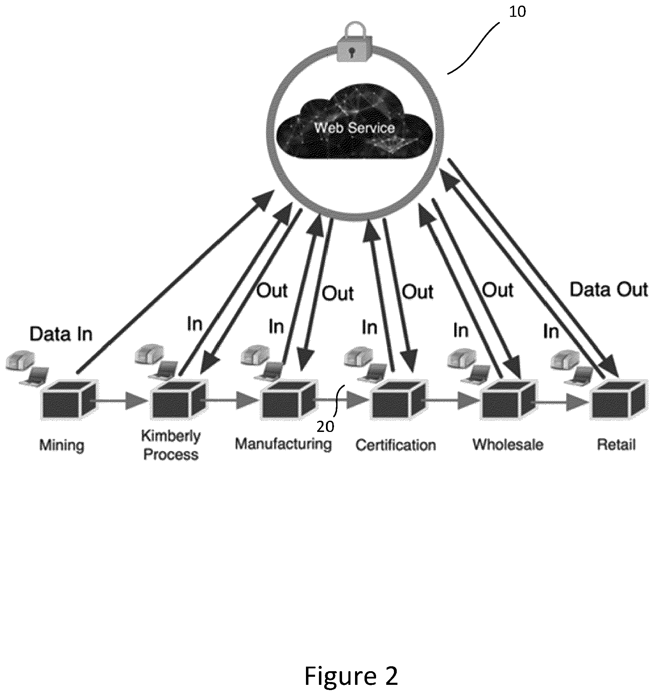

As illustrated in Figure 2, a manufacturing or gemstone processing facility, a certification facility, or a wholesale or retail premises, or any other suitable facility or location may be equipped with a client system 20 with access to the gemstone information system 10. When, for example, an action is taken in relation to a gemstone at the location (e.g. a cutting and/or polishing procedure at a manufacturing or gemstone processing facility, a certification procedure, or a commercial transaction), the gemstone may be characterised using the spectroscopy apparatus 22 of the client system 20 to generate spectral information comprising a plurality of spectral data sets for different regions of the gemstone. The resulting spectral information may be uploaded to the gemstone information system 10 using the computing device 24, and the gemstone information system 10 may determine the identification code for the gemstone by processing the spectral information as described above. In some cases, the identification code may be returned to the client system 20 over the network, e.g. for display on a display included in the computing device 24.

In addition to uploading spectral information to the gemstone information system, the client system 20 may additionally upload information identifying one or more actions that have been performed in relation to the gemstone (e.g. a cutting and/or polishing action, a certification action, or a transaction). The gemstone information system 10 may identify a record in the gemstone information data store 30 for which the identification code matches a unique ID (e.g. key, such as primary key) for the record. If the client system possesses the appropriate access credentials, the gemstone information system 10 may then update data for the gemstone, e.g. to record that the one or more actions have been performed. Conditional on appropriate access credentials, the gemstone information system may additionally or alternatively update status information for the gemstone (e.g. to change the status from "rough" to "polished") and/or may record that the action has been performed at a particular facility or at a particular location or premises, based on information received by the client system 20. In this way, the gemstone information system can maintain records of actions that have been taken in relation to gemstones (e.g. processing steps or transactions), the production status of the gemstone (e.g. rough or polished), as well as gemstone location history, and any other suitable information that is provided by appropriately authorised client systems 20.

In this way, example techniques described in this specification allow identification, tracking and tracing at all stages of the manufacturing and use lifetime of a gemstone, from mine to producer, reseller and customer.

The technique described herein is non-invasive, and in particular it does not rely on any inscribed identification method intended to distinguish one gemstone from another, and instead can make use of information which is already stored inside every single natural gemstone through defects originated by magma droplets and naturally developed crystallographic lattice dislocations and inclusions. Moreover the technique is based on the use of intrinsic features of natural precious stones which are the results of the stones formation over thousands of years under high temperature and pressure: this information is independent of the physical state of the sample and thus works equally well for both rough and polished gemstones.

As will be understood by those skilled in the art, where new training data arrives after the model has already been trained, the model may, for example, be re-trained (e.g. from scratch) using both the previous training data and the new training data.

For example, where an existing gemstone (e.g. raw gemstone) is cut into pieces, each resulting piece may be separately characterised using a client system 20 to generate spectral information (e.g. comprising spectral data sets acquired for a plurality of regions which cover the entire volume of the piece). The spectral information for each piece may be uploaded to the client system 20, as described above, for use in training the machine learning model. After re-training the model, the latent space representations of the spectral data sets for each piece forms a respective data cluster, which is assigned a respective label such that each piece is assigned a different identification code. In some examples, the identification code for each piece may be chosen to include a first portion comprising an identification code for the parent gemstone from which it was cut (and/or the identification code for the original raw gemstone from which it derives), as well as an additional portion (e.g. "-cut1", "cut2"), such that the identification code as a whole uniquely identifies the cut piece.

Although the discussion above has focused on determining identification codes for gemstones, in some examples information identifying an origin of the gemstone (e.g. a code for a particular mine) maybe determined instead of or in addition to determining the identification code for the gemstone, as described in more detail below.

Client System

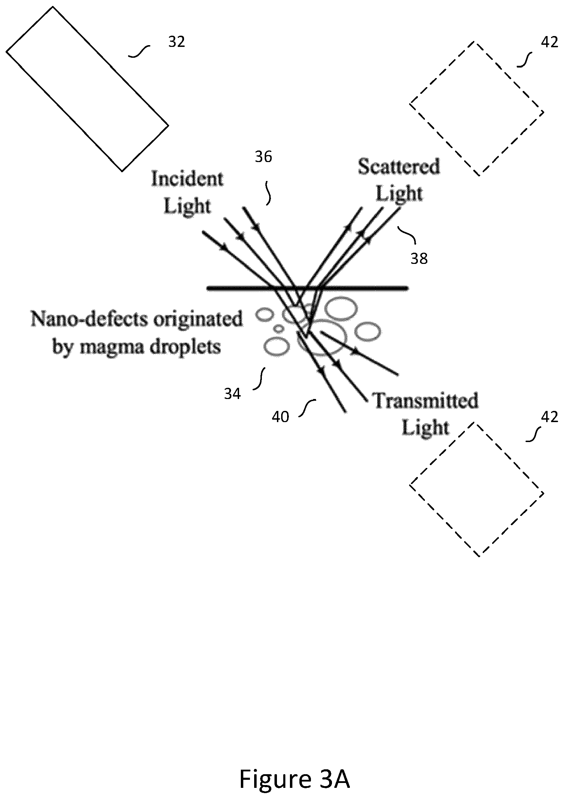

As illustrated in Figure 1, each client system 20 includes a spectroscopy arrangement 22 and a computing device 24. Figure 3A illustrates a spectroscopy arrangement 22 in more detail. As shown, a broadband source 32 of electromagnetic radiation is configured to illuminate a probe volume of the gemstone 34 with incident light 36. The broadband source may comprise a laser source which generates a broadband output including infrared light. Suitable laser sources are known to those skilled in the art and will not be described in any further detail here.

As shown, the incident light 36 partially reflects and scatters from the surface and a thin layer close to the surface to produce scattered light 38, and partially passes through the gemstone 34 to produce transmitted light 40. The scattered and/or transmitted light which carries information about the unique properties of the gemstone under investigation may be spectrally analysed through Fourier Transformation (FT) spectroscopy. A suitable spectrometer 42 may be positioned to detect and analyse either the scattered light 38 or the transmitted light 40, or both, so as to provide a spectral data set. In some examples, the incident light 36 may reflect from a back surface of the gemstone before reaching the spectrometer 42.

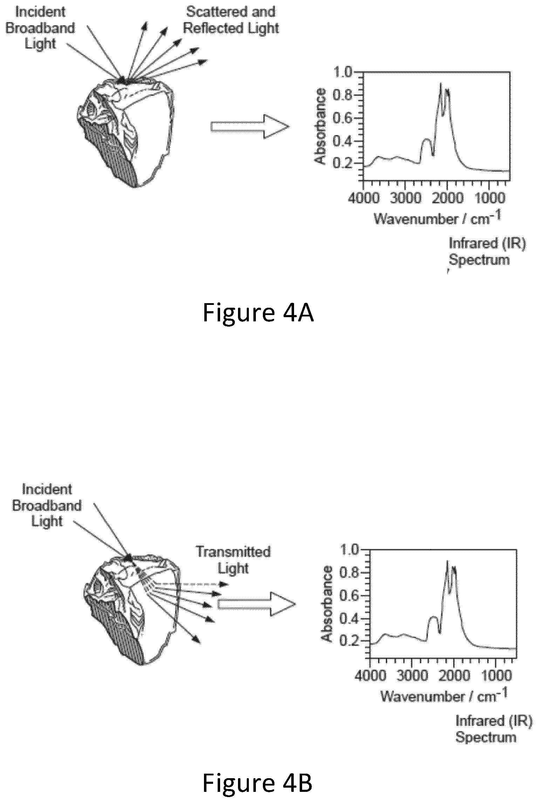

In the case of gemstones, it is particularly advantageous that Fourier-transform infrared spectroscopy (FTIR) is used in either transmission or reflection mode as illustrated in Figures 4A and 4B. Alternatively, a combination of both modes may be used to generate the spectral information. Suitable spectrometers for FTIR spectroscopy are known *per se* to those skilled in the art and will not be described here.

The acquired spectral data set is then stored in computer memory. Then the gemstone maybe moved (shifted or rotated) so that the same measurement can be performed for a different probe volume. This writing data process continues until preferably the spectral mapping covers the entire gemstone.

In some instances, depending on the shape, surface and body of the gemstone, the signal due to absorption inside the sample may be partly masked or affected by artifacts, e.g. due to multiple reflections, beam deflection, scattering etc. Acquiring multiple measurements and comparing them as described herein helps reduce the contribution from such artifacts because of larger statistical data collection and processing through machine learning.

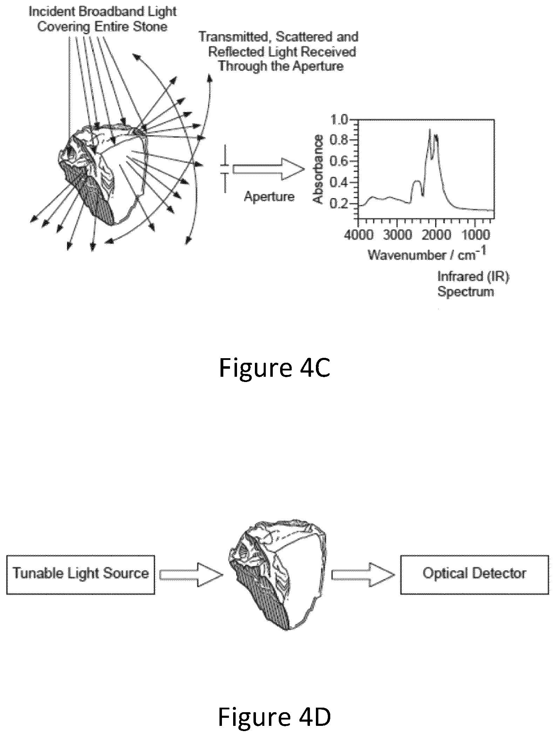

In some examples, the light from the broadband source may also be moved across the sample in addition to or as an alternative to moving the gemstone. Moreover, rather than shifting or rotating the gemstone, in some embodiments a beam may be used which interacts with the entire gemstone thickness and apertures may be used to achieve a spatially selected mapping. This is illustrated in Figure 4C.

In an alternative spectroscopy arrangement, a tunable source (e.g. a quantum cascade laser or a optical parametric oscillator) may be used instead of a broadband source, together with a detector (rather than a spectrometer). This is illustrated in Figure 4D. The wavelength of the tunable source may be varied over the desired range so as to obtain a spectral data set.

Irrespective of the spectroscopy arrangement that is used to obtain it, the resulting spectral data set for each region may comprise a spectrum (e.g. FTIR spectrum) taken within a finite bandwidth $F=(f_{max}-f_{min})$ with given resolution $\delta f$, so that the number of spectral data points is $N=F/\delta f$. The spectral data points represent relative intensity values at different frequencies/wavelengths within the bandwidth $F$. It will be understood that the spectral data points may represent intensity values as a function of wavelength or a function of frequency.

The number of such measurements M (i.e. the number of regions for which a spectral data set is recorded) depends on gemstone dimensions and spotsize of the illumination beam at the gemstone surface For example, for a gemstone diameter of 5mm and a writing beam size of 200um, about 200 spectral measurements maybe taken. However in other examples, fewer or more measurements maybe taken, and in some examples a single measurement for a single region of the gemstone maybe sufficient.

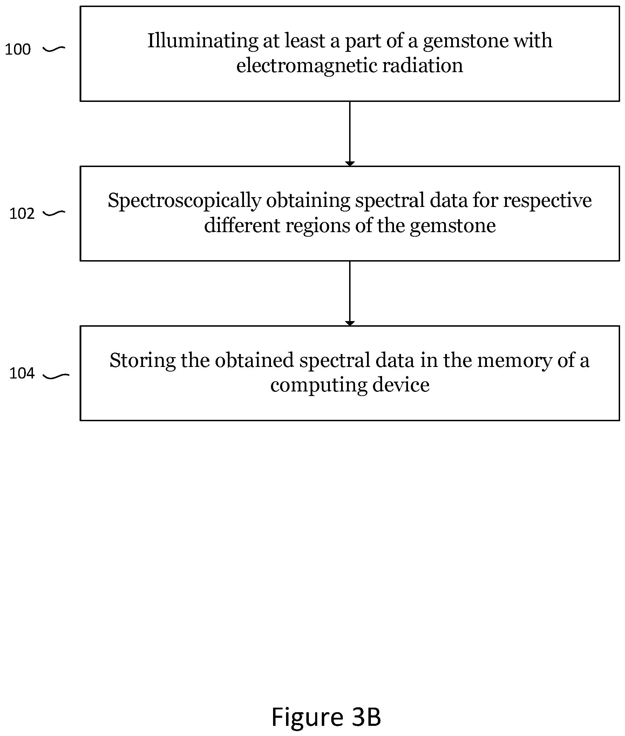

Figure 3B summarises the data acquisition process according to an example embodiment. In step 100, at least part of the gemstone is illuminated with electromagnetic radiation. In step 102, spectral data sets are spectroscopically obtained for respective different regions of the gemstone object. In step 104, the obtained spectral information, comprising one or more spectral data sets, is stored in the memory of the computing device 24. The computing device 24 includes suitable data communication equipment (e.g. data transmission equipment) for transmitting (i.e. uploading) data for processing by the gemstone information system 10. Thus, the computing device 24 acts as a network node of the computer network, and may be referred to herein as a local network node.

Gemstone Information System

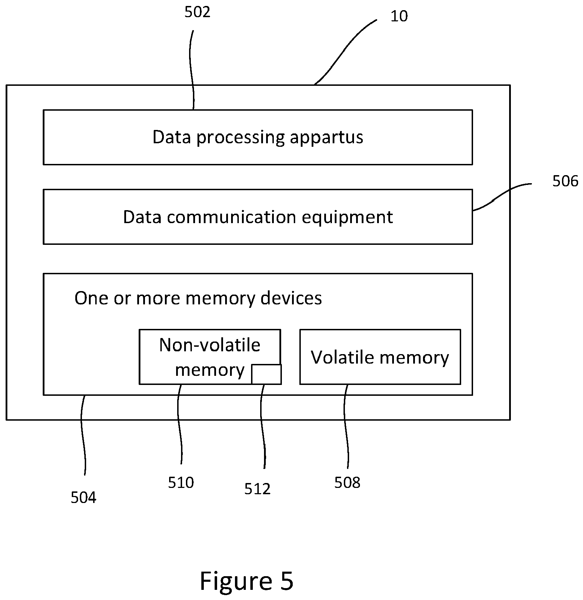

As shown in Figure 5, the gemstone information system 10 comprises a data processing apparatus 502 including one or more data processing devices (e.g. one or more processors), one or more memory devices 504 for storing instructions and data, and data communication equipment 506 (e.g. one or more receivers) for receiving data transmitted by the client devices 20. As described above, the gemstone information system thus includes or acts a remote network node which is configured to receive data from the local network nodes of the client system 20 over the network (e.g. over the internet).

The data processing devices and memories of the gemstone information system may be distributed over multiple locations (e.g. different data centres, or other locations in which gemstones are manufactured, processed, purchased, serviced, repaired or sold). The system may include networking equipment such as switches, hubs and routers to allow data communication between the different devices and memories that form the distributed system.

In various example implementations the one or more memory devices 504 comprise one or more working or volatile memories 508. The one or more processors may access the one or more volatile memories 508 in order to process data and may control the storage of data in memory. The one or more volatile memories 508 may comprise RAM of any type, for example Static RAM (SRAM), Dynamic RAM (DRAM), or comprise Flash memory.

The one or more memory devices may further comprise one or more non-volatile memories 510. The one or more non-volatile memories 510 may store a set of operation instructions 512 for controlling the operation of data processing apparatus 502 in the form of computer readable instructions. The one or more non-volatile memories 502 may be a memory of any kind such as a Read Only Memory (ROM), a Flash memory or a magnetic drive memory.

The data processing apparatus 502 is configured to execute operating instructions 512 to cause the system/apparatus to perform any of the methods described herein. The operating instructions 512 may comprise code relating to the hardware components of the gemstone information system 10, as well as code relating to the basic operation of the gemstone information system 10. Generally speaking, the data processing apparatus may execute one or more instructions of the operating instructions 512, which are stored permanently or semi-permanently in the one or more non-volatile memories 510, using the volatile memory 508 to temporarily store data generated during execution of said operating instructions 512.

Training a machine learning model

As discussed above, each spectral data set acquired by a spectroscopy arrangement 22 is a spectral measurement comprising a set of equally spaced (in frequency or wavelength domain) signal intensity readings. Therefore every measurement can be represented by a single point in an N-dimension space where N is the number of spectral data points. The number of spectral data points in each spectral data set may for example be 501, although of course it could be any number depending on the spectral measurement setup.

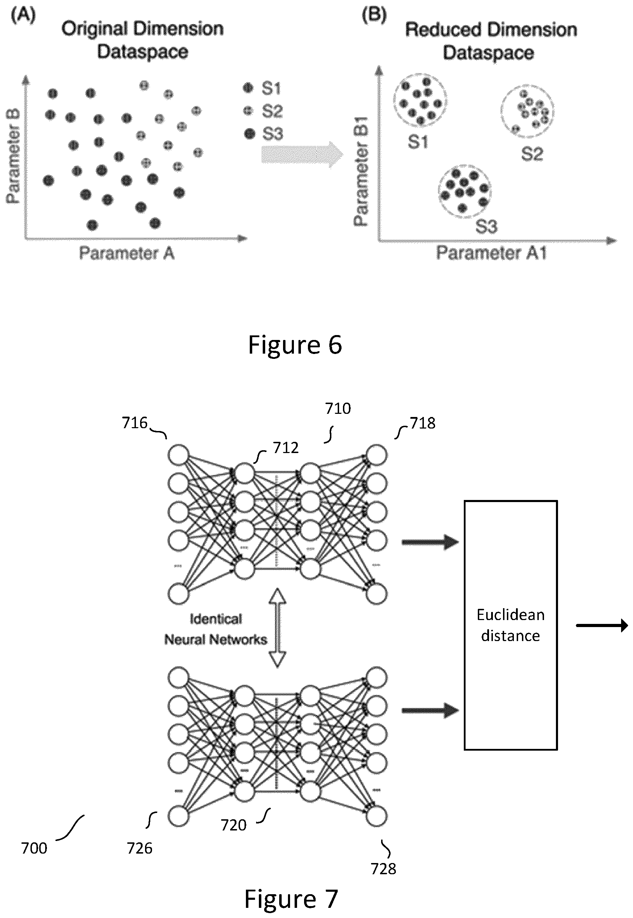

For the purposes of visual illustration, it is helpful to consider a reduced dimension of just two so that each measurement (i.e. each spectral data set) is represented by a point in a 2D graph. Figure 6(A) is a schematic of the measurements map for three gemstones Si, S2 and S3, on this basis.

In this case the spectral data sets are taken from different regions of the samples in order to obtain a complete 3D spectral image - hence multiple points (i.e. multiple spectral data sets) are shown for each of the three gemstones S1, S2 and S3. Therefore, each point in the original dimension dataspace includes information coming from a different volume of the sample, for example given by a different position of the sample with respect to the probing beam.

Techniques described herein change the parameter space in such a way that data readings from the same sample form a tightly packed cluster with characteristic distance between data points of the same sample as small as possible whereas the data points distance between different samples becomes as large as possible.

In particular, a machine learning model such as a neural network (e.g. a Siamese neural network) may be trained to achieve this aim, as described in more detail below. The neural network training goal is to minimize distance between similar pairs and maximize the distance between dissimilar pairs using loss function minimization through gradient descent.

The result of the data processing through the neural network is a lower dimension parameter space (e.g. an R dimensional space, where R=128) where data of the same sample forms a cluster and again we can simplify for graphical purposes its representation into a 2D space as is shown in Figure 6(B) The reduced dimension space may be referred to herein as a latent space, and vice versa.

As the data points for each gemstone sample in the reduced dimension space form a more tightly packed cluster, then we can label the cluster with an identification code and use this identification code as a unique identifier for the gemstone. Note that different clusters may overlap in the reduced-dimension space. Still, different clusters have different and separated centers of gravity.

As discussed above, a Siamese neural network (e.g. a "twin neural network") maybe trained to generate representations of spectral data sets in a latent space in which points related to the same gemstone form a cluster. Siamese neural networks are known *per se* and will not be described in detail here. An overview of the architecture of an exemplary Siamese neural network is illustrated in Figure 7. As shown, the network 700 comprises a first subnetwork 710 comprising first and second hidden layers and an output layer 718. Each of these layers comprises one or more nonlinear units in the form of neurons 712. As will be understood by those skilled in the art, a neuron has an associated sets of parameters (e.g. weights and biases) which determine the output of the neuron based on its inputs, and employs a suitable activation function (e.g. ReLU or other suitable nonlinear function). Each neuron in a layer calculates a weighted combination of the outputs of the preceding layer based on the current parameters for the neuron, and produces its own output in accordance with its activation function. Thus, the output of each layer is used as an input to the next layer until the output layer 718 is reached. As shown in Figure 7, the first subnetwork 710 also includes an input layer 716 configured to receive a spectral data set comprising a set of spectral data points representing a spectrum (e.g. an FTIR spectrum) as described above. For example, the input layer 716 may include a node for each spectral data point of the received spectral data set, so that each node of the input layer receives a different spectral data point as input. The input layer 716 passes these values as inputs to each neuron of the first hidden layer.

In one example, the input layer may comprise 501 nodes, and the first and second hidden layers may each comprise 128 nodes (i.e. neurons). The output layer may also comprise 128 nodes (i.e. neurons). However those skilled in the art will appreciate that different number of nodes could be used in each layer, and that any suitable number of hidden layers could be used. In some examples, the first subnetwork 710 may include convolutional layers. For example, the first subnetwork may comprise a series of convolutional layers and a final layer which is a fully connected layer.

The network 700 also includes a second subnetwork 720 which is identical to the first subnetwork 710. Thus, the second subnetwork has the same structure as the first subnetwork 710. Furthermore, the second subnetwork includes an input layer 726 configured to receive a spectral data set comprising spectral data points representing a spectrum (e.g. FTIR spectrum), and an output layer 728. As well as being identical in structure, the parameters associated with the corresponding neurons in each subnetwork 710, 720 are also the same because they are constrained to be the same during training (see below).

As discussed above, the first subnetwork 710 receives, at its input layer, a spectral data set in the form of a respective set of spectral data points for a particular spectrum, e.g. an FTIR spectrum captured for a particular probe volume of a particular gemstone. The number of spectral data points may be denoted by N, and thus the spectral data may be represented by a vector having N dimensions, wherein each component of the vector corresponds to a different spectral data point. Similarly, the second subnetwork 720 receives, at its input layer, spectral data in the form of a set of spectral data point for another spectrum, which again may comprise an FTIR spectrum have N data points and may thus also be represented by a vector having N dimensions.

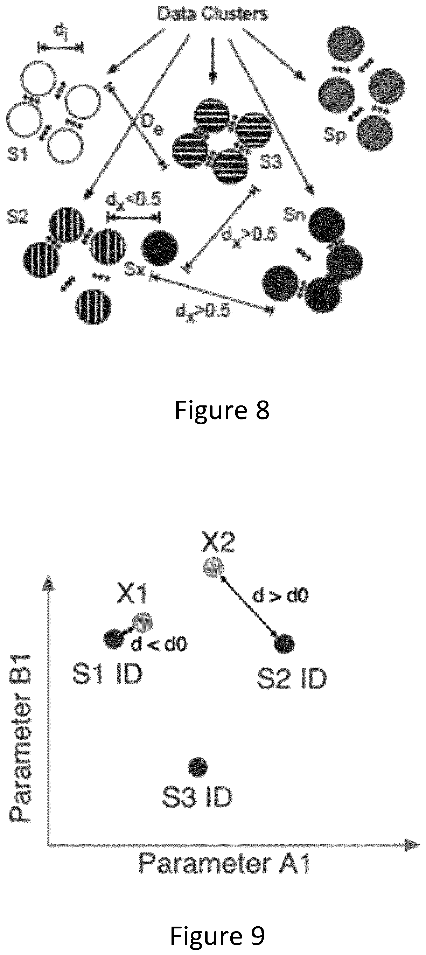

The first subnetwork 710 (and therefore also the second subnetwork 720) is configured during training of the neural network 400 to learn a transformation from N dimensional space (i.e. the space of FTIR spectra represented by N-dimensional vectors which may be input into the first subnetwork 710) to a lower R-dimensional space (latent space) in such a way that distances (e.g. Euclidian distances) in R-dimensional space represent a measure of similarity between the gemstones from which the spectral data sets received at the respective subnetworks 710, 720 were acquired. It will be understood that R is the size (i.e. number of neurons) in each output layer 718, 728. Specifically, the transformation is such that different measurements for the same gemstone form a close cluster of points with small Euclidian intra-cluster distance $d_i$ and which is much smaller than that between clusters for different gemstones (inter-cluster distance $D_e$). In other words during training, the neural network 700 finds the optimum latent space that maximise $D_e$ and minimises $d_i$. This is schematically illustrated in Figure 8.

In this way the neural network 700 is configured by its training such that the distance (e.g. Euclidean distance) between the outputs of the first and second subnetworks represents a measure of similarity between the gemstones from which the spectral data sets received at the respective subnetworks 710, 720 were acquired. This distance may be denoted by "d" and may comprise a number between o and infinity. The network 700 may be trained so that values of d closer to zero (i.e. short distances) are generated when the received spectra are from the same gemstone, while values of d closer to 1 (i.e. longer distances) are generated when the received spectra are from different gemstones.

The parameters of the neurons (weights and biases) of the network 700 form the trainable parameters of the network which are adjusted during training based on an objective function as described in more detail below.

In particular, the neural network maybe trained using pairs of spectral measurements, where each spectral measurement comprises a spectra data set including a plurality of spectral data points, the spectral data points representing relative intensity values at different wavelengths (or different frequencies) as discussed above.

It is advantageous for training purpose to use both similar pairs, i.e. spectral data sets derived from the same gemstone, and also dissimilar pairs, i.e. spectral data sets derived from different gemstones.

Each input pair of spectra is labelled as to whether the pair is from the same gemstone or not. Thus, each training data item comprises a pair of spectral data sets, labelled as to whether it is from the same gemstone or not.

To train the neural network with the training data items, the trainable parameters of the neural network are first initialised, e.g. randomly or in accordance with a particular initialisation scheme. The neural network 700 then processes the training data items by processing the first measurements of each pair using the first subnetwork 710 and the second measurement in each pair using the second subnetwork 720. A distance (e.g Euclidean distance) d is then calculated between the output of the first subnetwork 710 and the second subnetwork 720.

The objective of training is to minimise a suitable loss function. In one example, a contrastive loss function maybe used, as described in R. Hadsell, S. Chopra and Y. LeCun, "Dimensionality Reduction by Learning an Invariant Mapping" 2006 IEEE Computer Society Conference on Computer Vision and Pattern Recognition (CVPR'06), New York, NY, USA, 2006, pp. 1735-1742, doi: 10.1109/CVPR.2006.100. Training a Siamese neural network using a contrastive loss function is well known to those skilled in the art and will not be described in detail here. Briefly, a contrastive loss function maybe given by:

$$L(W, Y, \vec{X}_1, \vec{X}_2) =$$
$$(1 - Y)\frac{1}{2}(D_W)^2 + (Y)\frac{1}{2}\{max(0, m - D_W)\}^2$$

Where $D_w$ is the distance (e.g. Euclidean distance) calculated between the output of the first subnetwork 710 and the second subnetwork 720, Y is the label (which may be a binary value which is 1 if the input pair of spectral data sets are from the same gemstone and o if the input pair of spectra are from different stones), and m is a margin, which is an adjustable hyperparameter. Use of the margin m is known per se as described for example in the paper referenced above.

A suitable training algorithm such as stochastic gradient descent or other gradient-based method may be used to adjust the trainable parameters of the neural network to minimise the loss function, thereby training the neural network based on the training data items. It will be understood that gradient-based techniques involve calculation of the gradient of the loss function, which may be calculated using the backpropagation technique which is known to those skilled in the art and will not be described here.

As will be understand by those skilled in the art the two subnetworks 710, 720 are identical and remain identical during training. In practice only one subnetwork is trained but its parameters are used for both the first and second subnetworks 710, 720.

Although contrastive loss is described above, those skilled in the art will appreciate that other suitable loss functions, such as triplet loss may alternatively be used. Furthermore, although Euclidean distance may be used as described above, alternative distance measures such as Cosine distance may alternatively be used.

In one example, the following hyperparameters were used in training the model: learning rate = 0.0001; epochs = 250; batch size = 8; margin = 1.

Once trained, the model is stored in the data storage system 26 of the gemstone information system 10 where it can be used to determine unique identifiers based on spectral data sets received at the gemstone information system 10 as described below.

Although spectral data sets and their latent space representations may be considered as points in an N or R dimensional space respectively as described above, another way to represent and analyse spectral information is to construct digital images of spectral data sets. Both data representation methods are equivalent as being just different methods of representation of input spectral data set. Digital images may be constructed directly from spectral data sets or from their resultant latent space representations output by the machine learning model. The Siamese Network can thus encode each spectral data set into a digital image and in the final step compares two images (two spectra) coming from two different samples. The output is close to zero if the images are similar and whereas a large value means that two images belong to different samples.

Determining a unique identifier using the trained machine learning model

After the model has been trained, it can be used to determine unique identifiers based on spectral information received at the gemstone information system 10.

As described above, a client system 20 may acquire one or more spectral data sets for a gemstone and transmit this data to the gemstone information system 10. The one or more spectral data sets may comprise a plurality of spectral data sets corresponding to different regions of the gemstone. Each spectral data set may comprise a spectrum, i.e. a plurality of relative intensity values at different wavelength (or different frequencies). As discussed above the spectral data set may be considered an N-dimensional data point, where N may for example be 501.

When the one or more spectral data sets for a gemstone are received at the gemstone information system 10, they are each processed by one of the trained subnetworks 710, 720 to determine a latent space representation for each spectral data set. Since the subnetworks 710, 720 are identical neural networks, only one of the subnetworks (e.g. the first subnetwork 710) needs to be used for this purpose.

As will be understood from the description above, the input layer 716 of this neural network (first subnetwork 710) is configured to receive a spectral data set. For example, the input layer 716 may include a node for each spectral data point of the spectral data set, so that so that each node of the input layer receives a different spectral data point as input. The spectral data set is processed through the layers of the neural network to generate a respective output from the output layer 718. The output comprises a projection of the input spectral data set into a reduced-dimension space. That is, the neural network projects the N dimensional (e.g. 501 dimensional) input into an R dimensional space, where R may be less than N and may for example be 128. As discussed above, the output comprises a representation of the input spectral data set in a latent space (reduced dimension space) in which points relating to the same gemstone form a cluster.

When a plurality of spectral data sets for a gemstone are received, they are each processed by the neural network (e.g. first subnetwork 710) to determine a latent space representation for each spectral data set. In this way, a set of outputs are generated, one output for each spectral data set. The set of outputs form a data cluster.

Turning now to Figure 9, X1 represents the data cluster comprising the set of outputs generated for a gemstone under test. Figure 9 also shows respective data clusters for the gemstones S1, S2 and S3 described above. For convenience, these data clusters will also be referred to as S1, S2 and S3 respectively. Each of the data clusters S1, S2, S3 comprises a set of data points made up of the latent space representations of the spectral data sets acquired for different regions of the respective gemstone, as discussed above. As shown, each data cluster S1, S2, S3 is labelled with the unique identifier (e.g. identification code) that has been assigned to it.

The data cluster X1 and the data cluster S1 are compared. To this end, a measure of distance d may be calculated between the data cluster X1 and the data cluster S1. If the measure of distance is less than a threshold do then it is determined that the gemstone X1 under test belongs to the data cluster S1. The gemstone information system 10 then determines that the unique identifier for the gemstone X1 under test is the label for the data cluster S1.

If the measure of distance to data cluster S1 is greater or equal to the threshold do then a measure of distance is calculated to another labelled data cluster (e.g. S2, S3) and this process continues until a labelled data cluster is identified for which the measure of distance is less than the threshold do. The gemstone information system 10 then determines that the unique identifier for the gemstone under test is the label for that data cluster.

Alternatively, a measure of distance may be calculated between the data cluster X1 and each of the plurality of data clusters (e.g. S1, S2, S3). If a plurality of data clusters are identified for which the measure of distance is less than do, then the gemstone information system may determine that the unique identifier for the gemstone under test is the label for the data cluster for which the measure of distance is the smallest.

X2 represents a data cluster comprising the set of outputs for a subsequent gemstone under test. In this case the measure of distance between the data cluster X2 and each of the labelled data clusters (e.g. S1, S2, S3) is greater than or equal to Do. It is therefore determined that this gemstone is not recognised by the gemstone information system 10.

Accordingly the gemstone information system 10 determines which labelled data cluster, if any, a gemstone under test belong to. If the gemstone under test is recognised, the gemstone information system determines a unique identifier based on the label for the labelled data cluster. If the gemstone under test is not recognised, the gemstone information system 10 may generate an appropriate output to indicate this, e.g. a "sample is not in database" message.

To determine a measure of distance between a data cluster (e.g. X1, X2) under test and a labelled data cluster (e.g. S1, S2, S3), a measure of distance may be calculated between each pair of points within the two different clusters (i.e. where each pair comprises a point in the data cluster under test and a point in the labelled data cluster). That is, determining a measure of distance between the data clusters may comprise determining, for each point in the data cluster under test, a measure of distance between that point and each of the points in the labelled data cluster. A Euclidean distance or Cosine distance may for example be used as a measure of distance between two points, or a Euclidean or Cosine distance may be digitized (e.g. rounded) into discrete values (e.g. binary values) to form the measure of distance between two points.

Once the measure of distance has been determined for all pairs, these measures may be summed or averaged to determine the measure of distance between the data cluster (e.g. X1, X2) under test and the labelled data cluster (e.g. S1, S2, S3).

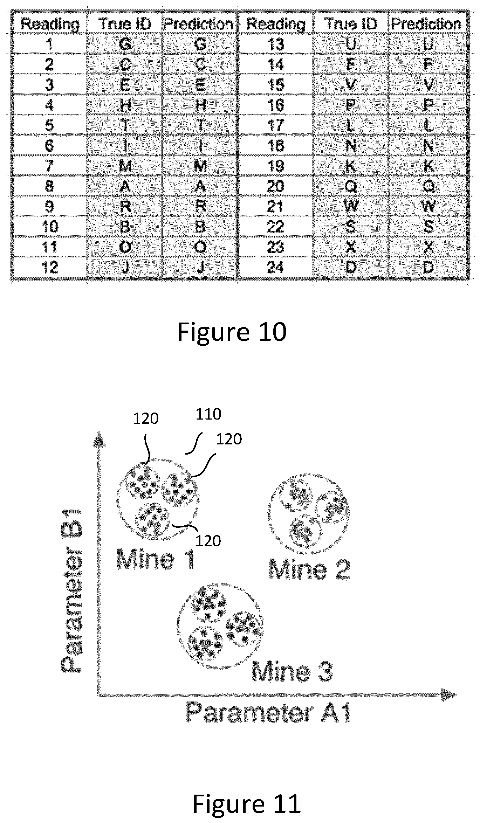

To demonstrate the method, a set of 24 rough diamond samples were each measured multiple times using a spectroscopy arrangement, taking spectra at different sample positions, so as to generate, for each sample, a plurality of spectral data sets for each of a respective plurality of regions of the sample as described above. The neural network was trained based on this data as described above and the latent space representations of the spectral data sets acquired for each sample were stored as separate data clusters, which were each given a different identification code (in this case each cluster was assigned a different letter). A "blind" test was run in which a sample was picked up arbitrarily from the set of 24 samples and measured again using the spectroscopy arrangement, again taking spectra at different sample positions so as to generate a set of spectral data sets for each of a respective plurality of regions of the sample, which was compared with the labelled data clusters as described above. The results are shown in Figure 10, which demonstrates 100% identification accuracy on each of the 24 rough diamond samples.

Determining gemstone origin

The technique described above may be modified to determine information identifying the geographical origin ("provenance") of a gemstone, rather than a unique identifier for the gemstone.

In this case, gemstones from the same origin (e.g. extracted from the same mine) are considered as a class without distinction between individual samples, and a neural network (e.g. Siamese neural network) is trained in the same way as described above, except that the Siamese neural network is trained to find a parameter space (i.e. latent space) where distance (e.g. Euclidean distance) between gemstones from the same origin is minimal, so that data for samples from the same origin (e.g. extracted from the same mine) forms a tightly packed cluster, as shown in Figure 11.

Here, we draw a distinction between an "origin cluster", which is a data cluster comprising data for gemstones from the same origin, and a "sample cluster", which is a data cluster comprising data for the same gemstone. As shown in Figure 11, each origin cluster 110 may comprise a plurality of sample clusters 120.

Once the neural network is trained, the origin clusters are labelled based on their origin, such that all gemstones from the same origin are considered part of the same class. When spectral information for a gemstone to be tested is received at the gemstone information system 10, this is compared with the origin clusters in a similar manner to that described above. In particular, when a plurality of spectral data sets for a gemstone are received, these are each processed by the neural network (e.g. first subnetwork 710) to determine a latent space representation for each spectral data set. In this way, a set of outputs are generated, one for each spectral data set, and these outputs form a data cluster for the gemstone under test.

However, instead of comparing the data cluster under test with the sample clusters (i.e. data clusters for individual gemstones), it is compared with the origin clusters. In particular, a measure of distance is calculated between the data cluster under test and an origin cluster, and if the measure of distance is below a threshold then the origin of the gemstone under test is determined to be the label for the origin cluster. If the measure of distance is greater than or equal to the threshold then the measure of distance is calculated to another origin cluster and this process is repeated until an origin cluster is identified for which the measure of distance is less than the threshold. Alternatively, a measure of distance may be calculated between the data cluster X1 and each of the plurality of origin clusters. If a plurality of data clusters are identified for which the measure of distance is less than do, then the origin of the gemstone under test may be determined to be the label for the origin cluster for which the measure of distance is the smallest.

Alternatively, if the measure of distance is equal to or greater than the threshold for all of the origin clusters, then the gemstone information system 10 may determine that the origin of the gemstone is not recognised.

To determine a measure of distance between a data cluster under test and an origin cluster, a measure of distance may be calculated between each pair of points (i.e. where each pair comprises a point in the data cluster under test and a point in the origin cluster). That is, determining a measure of distance between the data clusters may comprise determining, for each point in the data cluster under test, a measure of distance between that point and each of the points in the origin cluster (which, as discussed above may include one or more sample clusters). As described above, a Euclidean distance or Cosine distance may for example be used as a measure of distance between two points, or a Euclidean or Cosine distance may be digitized (e.g. rounded) into discrete values (e.g. binary values) to form the measure of distance between two points.

Once the measure of distance has been determined for all pairs, these measures may be summed or averaged to determine the measure of distance between the data cluster under test and the origin cluster.

Note that when training the machine learning model based on origin/provenance, the data points in a cluster for the gemstone may occupy a different position in the reduced dimension space with respect to the points of the same sample when training is performed for unique identification of a gemstone. Note also that the parameter space for origin identification might be different from that for individual sample identification and therefore two separate neural networks may be trained and used: one determine to determine gemstone origin and the other to determine its unique identifier.

Determining the geographical origin of a gemstone (e.g. the mine from which it is extracted) may form an important part of a certification process such as the Kimberley process illustrated in Figure 2. For example, a certification facility may be equipped with a client system 20 with access to the gemstone information system 10. The certification facility may, as part of a certification process for a gemstone, acquire spectral information for the gemstone using the client system 20. In particular, the certification facility may acquire spectral information in the form of a plurality of spectral data sets for each of a respective plurality of regions of the gemstone, as described above. The client system 20 may transmit the spectral information to the gemstone information system 10, which may determine the information identifying the origin of the gemstone using the techniques described herein. The information identifying the origin of the gemstone may for example comprise an identification code which may uniquely identify a mine from which the gemstone was extracted. In some cases, the information identifying the origin may be sent back to the client system 20 at the certifying facility, e.g. for display on a display of the computing device 24 of the client system 20.

Many modification and variations of the examples described above are possible.

For example, although Figure 1 shows a gemstone information data store 30 included in the data storage system 26 of the gemstone information system 10, in other examples the data store 30 may hosted elsewhere or may be implemented in decentralized way. For example, in some embodiments, the gemstone information data store 30 may be distributed over a network of interconnected computers, e.g. in the form of a blockchain.

Furthermore, alternative machine learning approaches to dimensionality reduction may be used in some embodiments, e.g. Principal Component Analysis (PCA), t-distributed Stochastic Neighbor Embedding (t-SNE), or Uniform Manifold Approximation and Projection (UMAP).

Many further modification and variations will be evident to those skilled in the art, which fall within the scope of the following claims:

**Claims**

1. A method comprising:

   obtaining spectral information for a gemstone, wherein obtaining the spectral information comprises receiving data that has been transmitted over a network, and

   determining, at one or more data processing devices, identification information for the gemstone using a machine learning model, wherein determining the identification information comprises:

   processing the spectral information using the machine learning model to generate a set of one or more outputs of the machine learning model from which the identification information is derived,

   wherein the identification information comprises:

   a unique identifier that has been assigned to the gemstone, or
   information identifying an origin of the gemstone.

2. The method of claim 1, wherein the spectral information comprises one or more spectral data sets for the gemstone, and wherein processing the spectral information using the machine learning model to generate the set of one or more outputs comprises, for each of the one or more spectral data sets: inputting, into the machine learning model, the spectral data set, and generating a respective output, wherein the machine learning model is configured by its training such that the respective output comprises a representation of the spectral data set in a latent space in which points related to the same gemstone form a cluster, or in which points related to the same gemstone origin form a cluster.

3. The method of claim 1 or 2, wherein determining identification information for the gemstone further comprises:

   comparing the set of one or more outputs with one or more labelled data clusters, wherein each of the one or more labelled data clusters is associated with respective label data identifying a respective known gemstone or a respective known gemstone origin;
   selecting one of the one or more labelled data clusters dependent on the comparison, and
   determining the unique identifier or the information identifying an origin of the gemstone based on the label data for the selected labelled data cluster.

4. The method of claim 3, wherein comparing the set of one or more outputs with one or more labelled data clusters comprises:

   determining a measure of distance between the set of one or more outputs and the one or more labelled data clusters;
   wherein selecting one of the one or more labelled data clusters dependent on the comparison comprises selecting a labelled data cluster for which the measure of distance is less than a threshold, or for which the measure of distance is the smallest.

5. The method of claim 4, wherein:

   the spectral information comprises a plurality of spectral data sets for a respective plurality of regions of the gemstone, and wherein the set of one or more outputs of the machine learning model comprise a plurality of outputs, each output being generated by inputting a respective spectral data set into the machine learning model, wherein determining a measure of distance between the set of one or more outputs and the one or more labelled data clusters comprises, for each of the plurality of outputs, determining a measure of distance between the output and each of a plurality of points in the labelled data cluster.

6. The method of any one of claims 3 to 5, wherein each of the labelled data clusters comprises a set of data points, wherein the data points of the labelled data cluster comprise latent space representations of spectral data sets obtained from the same gemstone, or obtained from gemstones having the same origin.

7. The method of any one of claims 3 to 6, wherein the selected labelled data cluster is one of plurality of labelled data clusters, each labelled with a different identification code, and wherein determining the identification information for the gemstone comprises determining that the obtained spectral information is associated with one of the plurality of identification codes,

8. The method of any one of the preceding claims, wherein the spectral information comprises a plurality of spectral data sets obtained from different regions of the gemstone, wherein determining the identification information comprises comparing each spectral data set with a plurality of stored spectral data sets obtained from different regions of a known gemstone.

9. The method of any one of the preceding claims, further comprising updating data for the gemstone in a gemstone information data store, wherein the data for the gemstone is uniquely identified with the unique identifier.

10. A method of digitally tracking actions in a gemstone supply chain comprising:

receiving, over a network, information identifying an action which has been performed in relation to a gemstone, determining a unique identifier for the gemstone in accordance with the method of any one of claims 1 to 9, and updating data for the gemstone in a gemstone information data store to indicate that the action has been performed,
wherein the data for the gemstone in the gemstone information data store is uniquely identified by the unique identifier.

11. A method of training a machine learning model to generate a representation of an input spectral data set in a latent space in which points related to the same gemstone form a cluster, or in which points related to the same gemstone origin form a cluster, comprising:

obtaining training data comprising one or more training data items, wherein obtaining the training data comprises receiving data that has been transmitted over a network, wherein each training data item includes:

a pair of measurements selected from a set of measurements, each measurement in the set of measurements comprising a spectral data set obtained for a gemstone, and
a label indicating whether the pair of gemstones corresponding to the pair of measurements relate to the same gemstone, or relate to the same gemstone origin,

processing, at a data processing apparatus, the pairs of measurements included in the one or more training data items using the machine learning model to generate a predicted output for each training data item;
adjusting, at the data processing apparatus, parameters of the machine learning model based on a training objective, wherein the training objective comprises minimising a distance between the predicted output of related pairs and maximising the distance between the predicted outputs of unrelated pairs.

12. The method of any one of the preceding claims, wherein the gemstone comprises a diamond.

13. A system comprising a data processing apparatus configured to perform the method of any one of the preceding claims.

14. The system of claim 13, and one or more client systems, each client system comprising:

a spectroscopy arrangement to obtain one or more spectral data sets for the gemstone, the spectroscopy arrangement including a source of electromagnetic radiation configured for illuminating at least part of the gemstone, and
a transmitter configured to transmit the one or more spectral data sets, or data derived therefrom, for processing using the machine learning model.

15. A system comprising:

a spectroscopy arrangement to obtain one or more spectral data sets for one or more regions of a gemstone, the spectroscopy arrangement including a source of electromagnetic radiation configured for illuminating at least part of the gemstone;
a transmitter for use in uploading said one or more spectral data sets, or data derived therefrom, over a network for processing by a remote data processing system,
wherein the remote data processing system comprises:

one or more processors; and

computer-readable instructions, which when executed by the one or more processors, cause the one or processors to perform the method of any of claims 1 to 12.

Figure 1

Figure 2

Figure 3A

100 Illuminating at least a part of a gemstone with electromagnetic radiation

102 Spectroscopically obtaining spectral data for respective different regions of the gemstone

104 Storing the obtained spectral data in the memory of a computing device

Figure 3B

Figure 4A

Figure 4B

Figure 4C

Figure 4D

502

10

Data processing appartus

Data communication equipment

506

One or more memory devices

Non-volatile memory

Volatile memory

504

510

512

508

# Figure 5

Figure 6

Figure 7

Figure 8

Figure 9

| Reading | True ID | Prediction | Reading | True ID | Prediction |
|---------|---------|------------|---------|---------|------------|
| 1 | G | G | 13 | U | U |
| 2 | C | C | 14 | F | F |
| 3 | E | E | 15 | V | V |
| 4 | H | H | 16 | P | P |
| 5 | T | T | 17 | L | L |
| 6 | I | I | 18 | N | N |
| 7 | M | M | 19 | K | K |
| 8 | A | A | 20 | Q | Q |
| 9 | R | R | 21 | W | W |
| 10 | B | B | 22 | S | S |
| 11 | O | O | 23 | X | X |
| 12 | J | J | 24 | D | D |

Figure 10

Figure 11

Europäisches
Patentamt

European
Patent Office

Office européen
des brevets

# EUROPEAN SEARCH REPORT

Application Number

EP 22 38 2568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/034795 A1 (TAKAHASHI HIROSHI [US] ET AL) 3 February 2022 (2022-02-03) * paragraphs [0060] – [0064]; claim 1; figures 14, 15 * | 1-15 | INV. G01N21/87 G06T7/00 G06N3/04 G06N3/08 G01N21/88 |
| X | US 2021/027447 A1 (PARIKH ANIKET [US] ET AL) 28 January 2021 (2021-01-28) * paragraphs [0001], [0002], [0083], [0092], [0093], [0103], [0132]; claim 1; figure 3 * | 1-15 | |
| A | EP 1 630 549 A1 (JACOBS IVO [BE]) 1 March 2006 (2006-03-01) * abstract; claims 1-19; figures 1, 2 * | 1-15 | |
| A | US 2003/223054 A1 (WARWICK MALCOLM RAYMOND [CA]) 4 December 2003 (2003-12-04) * paragraphs [0001], [0043], [0050]; figure 1 * | 1-15 | |
| A,D | HADSELL R ET AL: "Dimensionality Reduction by Learning an Invariant Mapping", CONFERENCE ON COMPUTER VISION AND PATTERN RECOGNITION, 2006 IEEE COMPUTER SOCIETY , NEW YORK, NY, USA 17-22 JUNE 2006, IEEE, PISCATAWAY, NJ, USA, vol. 2, 17 June 2006 (2006-06-17), pages 1735-1742, XP010922992, DOI: 10.1109/CVPR.2006.100 ISBN: 978-0-7695-2597-6 * abstract * | 1-15 | **TECHNICAL FIELDS SEARCHED (IPC)** G01N G06T G06N |

The present search report has been drawn up for all claims

| Place of search | Date of completion of the search | Examiner |
|---|---|---|
| Berlin | 14 November 2022 | Koll, Hermann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 2568

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2022

| Patent document cited in search report | | Publication date | Patent family member(s) | | Publication date |
|---|---|---|---|---|---|
| US 2022034795 | A1 | 03-02-2022 | TW 202212805 A | | 01-04-2022 |
| | | | US 2022034795 A1 | | 03-02-2022 |
| | | | WO 2022026274 A1 | | 03-02-2022 |
| US 2021027447 | A1 | 28-01-2021 | NONE | | |
| EP 1630549 | A1 | 01-03-2006 | NONE | | |
| US 2003223054 | A1 | 04-12-2003 | AU 2003233705 A1 | | 12-12-2003 |
| | | | US 2003223054 A1 | | 04-12-2003 |
| | | | WO 03099054 A2 | | 04-12-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Microwave Spectroscopy as a Potential Tool for Characterizing Synthetic HPHT Diamonds. *CrystEngComm,* 2022, vol. 24 (10), 1849
- *PHYSICAL REVIEW APPLIED,* 2020, vol. 14, 014009

- **R. HADSELL ; S. CHOPRA ; Y. LECUN.** Dimensionality Reduction by Learning an Invariant Mapping. *2006 IEEE Computer Society Conference on Computer Vision and Pattern Recognition (CVPR'06), New York, NY, USA,* 2006, 1735-1742